# EUROPEAN PATENT SPECIFICATION

(11) **EP 3 140 353 B1**
(45) Date of publication and mention of the grant of the patent: **07.10.2020**
(21) Application number: 15723664.7
(22) Date of filing: 05.05.2015
(51) Int. Cl.: C09D 4/06, C09D 133/06

(54) **A COATING COMPOSITION**
BESCHICHTUNGSZUSAMMENSETZUNG
COMPOSITION DE REVÊTEMENT

(30) Priority: 09.05.2014 EP 14167789
(43) Date of publication of application: 15.03.2017
(73) Proprietor: PPG Coatings Europe B.V., 1047 BB Amsterdam (NL)
(72) Inventor: OLSON, Kurt, Allison Park, Pennsylvania 15101 (US); KOLK, Kees van der, NL 1047 BB Amsterdam (NL); KALSANI, Venkateshwarlu, Allison Park, Pennsylvania 15101 (US); MAYO, Michael, Allison Park, Pennsylvania 15101 (US)
(74) Representative: Appleyard Lees IP LLP
(86) International application number: PCT/EP2015/059863
(87) International publication number: WO 2015/169806

(56) References cited:
- WO-A1-2012/162026
- US-A- 2 857 354
- US-A1- 2004 235 984
- US-A1- 2012 288 700

## Description

The present invention relates to a coating composition. In particular, the present invention relates to a primer coating composition, especially to a primer coating composition for a marine vessel, marine structure or an aircraft.

Coating systems that are deposited onto a substrate can be subjected to damage from the environment. For example, corrosion of a metallic substrate such as, for example, a marine vessel, a marine structure or an aircraft, can occur as the substrate is exposed to oxygen and/or water. A "primer" coating layer is often used to protect the substrate from corrosion and other issues. The primer layer may be applied directly to a substrate or the substrate may first be pre-treated. Pre-treatments often act to passivate a metal substrate and promote corrosion resistance. Primer coating layers may then be over-coated with intermediate or top coat layers.

WO2012/162026 discloses a coating system for application to a substrate having a sol-gel film layer applied thereon including a decorative colour coat applied directly on top of the sol-gel film without an intervening adhesion layer.

Typically, primer coatings and pre-treatments have utilised chromium compounds and/or other heavy metal compounds to achieve a desired level of corrosion resistance and adhesion to subsequently applied coatings. However, it is desirable to reduce or eliminate the use of chromium and/or other heavy metals as their use produces waste streams that pose environmental concerns and disposal issues.

Chrome-free epoxy primers are known in the art to provide corrosion protection. However, corrosion performance is variable and is dependent both on the substrate and on the surface treatment.

It is known that the choice of primer may influence the properties of a subsequent overcoat intermediate or top coat layer.

It is an object of aspects of the present invention to provide one or more solutions to the above mentioned or other problems.

According to a first aspect of the present invention there is provided an overcoatable primer coating composition comprising;
i) a solvent-borne epoxy functional acrylic binder formed from glycidyl methacrylate and at least one further ethylenically unsaturated monomer;
ii) a crosslinker comprising a polyamine; and
iii) a further binder comprising an epoxy functional binder.

By ethylenically unsaturated monomer it is meant any monomer including an unsaturated C-C bond(s), for example, alkenes, alkynes, conjugated and unconjugated dienes or functional alkenes. In certain embodiments, the at least one further ethylenically unsaturated monomer may comprise an acrylic monomer, a vinylic monomer or combinations thereof.

Reference to acrylic monomer herein includes any suitable alkyl(alk)acrylate or (alk)acrylic acid. Suitable examples of acrylic monomers include, but are not limited to the following: methacrylic acid; methylacrylate; ethylacrylate; acrylic acid; n-butyl acrylate; iso-butyl acrylate; t-butyl acrylate; methyl(meth)acrylate, ethyl(meth)acrylate, propyl(meth)acrylate; n-butyl(meth)acrylate; iso-butyl(meth)acrylate; sec-butyl(meth)acrylate; tert-butyl(meth)acrylate; cyclohexyl(meth)acrylate; cyclohexyl acrylate; 2-ethylhexyl(meth)acrylate; 2-ethylhexyl acrylate; isooctyl(meth)acrylate; isodecyl(meth)acrylate; lauryl(meth)acrylate; lauryl acrylate; stearyl(meth)acrylate; isobornyl(meth)acrylate; isobornyl acrylate; glycidyl methacrylate; glycidyl acrylate; hydroxyl-functional acrylates such as 2-hydroxyethyl methacrylate; hydroxypropylethyl methacrylate; 2-hydroxyethyl acrylate; hydroxypropyl acrylate; hydroxyethyl(meth)acrylate; hydroxypropyl(meth)acrylate; 2-hydroxybutyl(meth)acrylate; 4-hydroxybutyl(meth)acrylate; adducts of hydroxy(meth)acrylates with lactones such as the adducts of hydroxyethyl(meth)acrylate with 6-caprolactone; ethylene glycol di(meth)acrylate; 1,3-butylene glycol di(meth)acrylate; 1,4-butanediol di(meth)acrylate; 2,3-dimethylpropane 1,3-di(meth)acrylate; 1,6-hexanediol di(meth)acrylate; propylene glycol di(meth)acrylate; dipropylene glycol di(meth)acrylate; tripropylene glycol di(meth)acrylate; tetraethylene glycol di(meth)acrylate; tetrapropylene glycol di(meth)acrylate; ethoxylated hexanediol di(meth)acrylate; propoxylated hexanediol di(meth)acrylate; neopentyl glycol di(meth)acrylate; alkoxylated neopentyl glycol di(meth)acrylate; hexylene glycol di(meth)acrylate; diethylene glycol di(meth)acrylate; polyethylene glycol di(meth)acrylate; polybutadiene di(meth)acrylate; thiodiethyleneglycol di(meth)acrylate; trimethylene glycol di(meth)acrylate; triethylene glycol di(meth)acrylate; alkoxylated hexanediol; di(meth)acrylate; alkoxyolated neopentyl glycol di(meth)acrylate; pentanediol di(meth)acrylate; cyclohexane dimethanol di(meth)acrylate; ethoxylated bisphenol A di(meth)acrylate; glycerol tri(meth)acrylate; trimethylolpropane tri(meth)acrylate; ethoxylated trimethylolpropane tri(meth)acrylate; propoxylated trimethylolpropane tri(meth)acrylate; ditrimethylolpropane tetra(meth)acrylate; pentaerythritol tetra(meth)acrylate; ethoxylated pentaerythritol tetra(meth)acrylate; propoxylated pentaerythritol tetra(meth)acrylate; dipentaerythritol penta(meth)acrylate and combinations thereof. In certain embodiments, mixtures of (alkyl)acrylate monomers may be used, including mixtures of mono, di, tri, and/or tetra (alkyl)acrylates. As used herein and as conventional in the art, use of "(meth)acrylate", and like terms, refers to both methacrylate and acrylate.

The term "vinylic monomer", as used herein, refers to a compound incorporating an ethenyl group of the formula -CH=CH₂. Suitable examples of vinylic monomers include, but are not limited to the following: styrene; vinyl acetate; vinyl toluene; alkyl substituted styrenes such as α-methyl styrene; vinyl acetate-ethylene; vinyl-acetate-VEOVA (trademark; vinyl esters of versatic acid); styrene-butadiene; vinyl toluene-butadiene; styrene-acrylonitrile; vinyl toluene-acrylonitrile; diisocyanate-polyol; vinyl alcohol; vinyl butyral; vinyl chloride; vinylidene chloride and combinations thereof.

By the term, "versatic acid" it is meant an acid or mixture of acids corresponding to the general formula CR⁵R⁶CH₃CO₂H in which there is a total of 9 to 11 carbon atoms and each of R⁵ and R⁶ is an alkyl group. A general formula of versatic acid is shown in formula (i) below:

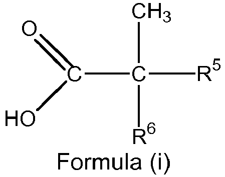

Accordingly, the general formula of a vinyl ester of versatic acid is shown in formula (ii) below:

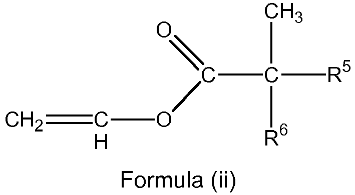

Wherein R5 and R6 each independently represents a C1 to C7 branched or unbranched alkyl group, but wherein the total number of carbon atoms in the vinyl ester of versatic acid of formula (ii) is between 11 and 13.

Accordingly, R⁵ and R⁶ may each independently be selected from a methyl group; an ethyl group, a linear or branched propyl group, a linear or branched butyl group; a linear, branched or cyclic pentyl group; a linear, branched or cyclic hexyl group; or a linear, branched or cyclic heptyl group.

For example, if R⁵ is selected as a propyl group, then R⁶ may be selected as any of a linear, branched or cyclic propyl, butyl or pentyl group, thereby making a vinyl ester of versatic acid having 11, 12 or 13 carbon atoms respectively.

In a particularly suitable embodiment, the number of carbon atoms in the vinyl ester of versatic acid is 11, thus being a vinyl ester of a versatic acid having 9 carbon atoms.

Such vinyl esters of versatic acid are commercially available under the name "Veova" (RTM) from Momentive Chemicals.

In certain embodiments, the ethylenically unsaturated monomer may comprise a vinylic monomer. Suitably, the ethylenically unsaturated monomer may comprise styrene.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by an oxygen or sulphur atom, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by an oxygen or sulphur atom, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having one or several, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by an oxygen or sulphur atom, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by an oxygen or sulphur atom, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

As used herein, the singular includes the plural and plural encompasses singular, unless specifically stated otherwise. For example, the use of the singular, i.e. "a" or "an", includes "one or more". In addition, as used herein, the use of "or" means "and/or" unless specifically stated otherwise, even though "and/or" may be explicitly used in certain instances.

The solvent-borne epoxy functional acrylic binder may be formed by any suitable method, such as by conventional polymerisation methods. Suitable methods will be well known to a person skilled in the art and include the following: suspension polymerisation; solution polymerisation; bulk polymerisation and emulsion polymerisation. General preparation of solvent-borne epoxy functional acrylic binders is described in "Polymer Syntheses", Stanley R. Sandler et al, Vol 2, published by Academic Press, 2007.

The solvent-borne epoxy functional acrylic binder may have any suitable molar ratio of glycidyl methacrylate to ethylenically unsaturated monomer. In certain embodiments the ratio of glycidyl methacrylate to ethylenically unsaturated monomer may range from 10:1 to 1:10, such as from 9:1 to 1:9.

The glycidyl methacrylate and at least one further ethylenically unsaturated monomer may represent any suitable amount by weight of the monomers that form the solvent-borne epoxy functional acrylic binder. In certain embodiments, the glycidyl methacrylate and at least one further ethylenically unsaturated monomer may represent at least 50% by weight of the monomers that form the solvent-borne epoxy functional acrylic binder, suitably at least 60% by weight of the monomers that form the solvent-borne epoxy functional acrylic binder, such as at least 70% by weight of the monomers that form the solvent-borne epoxy functional acrylic binder, or even at least 80% by weight of the monomers that form the solvent-borne epoxy functional acrylic binder.

In certain embodiments, the glycidyl methacrylate and styrene monomers may represent any suitable amount by weight of the monomers that form the solvent-borne epoxy functional acrylic binder. In certain embodiments, the glycidyl methacrylate and styrene monomers may represent at least 50% by weight of the monomers that form the solvent-borne epoxy functional acrylic binder, suitably at least 60% by weight of the monomers that form the solvent-borne epoxy functional acrylic binder, such as at least 70% by weight of the monomers that form the solvent-borne epoxy functional acrylic binder, or even at least 80% by weight of the monomers that form the solvent-borne epoxy functional acrylic binder.

The solvent-borne epoxy functional acrylic binder may have any suitable number-average molecular weight (Mn). In certain embodiments, the solvent-borne epoxy functional acrylic binder may have an Mn from 1,000 to 50,000 Daltons (Da = g/mole), suitably from 1,000 to 25,000 Da, such as from 1,000 to 10,000, or even from 1,000 to 5,000 Da.

The number-average molecular weight may be measured by any suitable method. Techniques to measure the number-average molecular weight will be well known to a person skilled in the art. Suitably, the Mn may be determined by gel permeation chromatography using a polystyrene standard.

The solvent-borne epoxy functional acrylic binder may have any suitable weight-average molecular weight (Mw). In certain embodiments, the solvent-borne epoxy functional acrylic binder may have an Mw from 5,000 to 50,000 Daltons (Da = g/mole), suitably from 5,000 to 30,000 Da, such as from 5,000 to 20,000 Da, or even from 5,000 to 10,000 Da.

The weight-average molecular weight may be measured by any suitable method. Techniques to measure the weight-average molecular weight will be well known to a person skilled in the art. A person skilled in the art will appreciate that techniques to measure the number-average molecular weight may also be applied to measure the weight-average molecular weight. Suitably, the Mw may be determined by gel permeation chromatography using a polystyrene standard.

The solvent-borne epoxy functional acrylic binder may have any suitable glass transition temperature (Tg). In certain embodiments, the solvent-borne epoxy functional acrylic binder may have a Tg from 50 to 120 °C.

The solvent-borne epoxy functional acrylic binder may have any suitable viscosity. In certain embodiments, the solvent-borne epoxy functional acrylic binder may have a viscosity from 320 to 15,000 Centipoise, suitably from 500 to 10,000 Centipoise, such as from 1,000 to 6,000 Centipoise, or even from 2,000 to 5,000 Centipoise as measured in accordance with ASTM method D-1545 using a bubble viscometer.

"Polyamine" and like terms, as used herein, refers to a compound with at least two amino groups, such as two, three or four amino groups. The amino groups of the polyamine may be primary, secondary or tertiary amines. Suitable crosslinkers comprising a polyamine will be well known to a person skilled in the art. The crosslinker comprising a polyamine may be a diamine, triamine, tetraamine, a higher functional amine or a combination thereof.

Examples of suitable diamines include, but are not limited to the following: ethylene diamine; 1,2-diaminopropane; 1,5-diamino-2-methylpentane (such as that commercially available as DYTEK A from Invista); 1,3-diaminopentane (such as that commercially available as DYTEK EP from Invista); 1,2-diaminocyclohexane (such as that commercially available as DCH-99 from Invista); 1,6-diaminohexane; 1,11-diaminoundecane; 1,12-diaminododecane; 3-(cyclohexylamino)propylamine; 1-amino-3,3,5-trimethyl-5-aminomethylcyclohexane; isophoronediamine (IPDA); 4,4'-diaminodicyclohexylmethane (such as that commercially available as PACM-20 from Air Products or DICYKAN from BASF); 3,3'-dimethyl-4,4'-diaminodicyclohexyl methane (such as that commercially available as DIMETHYLDICYKAN or LAROMIN C260 from BASF; or ANCAMINE 2049 from Air Products); 3,3'-[1,4-butanediylbis-(oxy)bis]-1-propanamine; menthanediamine; diamino functional polyetherpolyamines having aliphatically bound primary amino groups, examples of which include JEFFAMINE D-230, JEFFAMINE D-400, JEFFAMINE D-2000 and JEFFAMINE D-4000 (commercially available from Huntsman Corporation) and combinations thereof.

Examples of suitable triamines include, but are not limited to the following: diethylene triamine; dipropylene triamine; bis(hexamethylene) triamine; triamino functional polyetherpolyamines having aliphatically bound primary amino groups (such as those commercially available as JEFFAMINE T-403, T-3000 or T-5000 from Huntsman Corporation) and combinations thereof.

Examples of suitable tetra or higher functional amines include, but are not limited to the following: diethylene tetramine; triethylene tetramine, tetraethylene pentamine and combinations thereof.

In certain embodiments, the polyamine may be a diamine. Suitably, the crosslinking agent may be 3,3'-dimethyl-4,4'-diaminodicyclohexyl methane.

"Overcoatable", and like terms as used herein, refers to coating compositions that may have a subsequent layer of coating applied thereon. For example, the overcoatable primer coating compositions may have 0 (zero) or multiple, such as 1, 2, 3 or 4 etc., subsequent layers of coating applied thereon. For the avoidance of doubt, the subsequent layers of coating, when present, may be the same or different to the overcoatable primer coating compositions and may be the same or different to each other. In some embodiments, the overcoatable primer coating compositions may have at least one subsequent layers of coating applied thereon.

The crosslinking agent may be present in the overcoatable primer coating composition in any suitable amount. In certain embodiments, the crosslinking agent may be present in the overcoatable primer coating composition in amounts from 1 to 50 wt%, suitably from 5 to 30 wt%, such as from 10 to 20 wt% based on the total solid weight of the coating composition.

The overcoatable primer coating composition according to the present invention may further comprise a solvent. The overcoatable primer coating composition may comprise a single solvent or a mixture of solvents. The solvent may comprise an organic solvent or a mixture of organic solvents. Suitably, the overcoatable primer coating composition comprises an organic solvent or a mixture of organic solvents.

In certain embodiments, the solvent may contain less than 20 wt% water, suitably less than 10 wt% water, more suitably less than 5 wt% water, or even less than 1 wt% water. Suitably, the solvent may contain substantially no water.

Suitable organic solvents include, but are not limited to the following: aliphatic hydrocarbons such as mineral spirits and high flash point naptha; aromatic hydrocarbons such as benzene; toluene; xylene; solvent naptha 100, 150, 200; those available from Exxon-Mobil Chemical Company under the SOLVESSO trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; glycols such as butyl glycol; glycol ethers such as methoxypropanol; ethylene glycol monomethyl ether; ethylene glycol monobutyl ether and combinations thereof. The solvent, when present, may suitably be used in the overcoatable primer coating composition in amounts from 10 to 90 wt%, such as from 20 to 80 wt%, or even from 30 to 70 wt% based on the total solid weight of the overcoatable primer coating composition.

The overcoatable primer coating composition according to the present invention may comprise any suitable amount of the solvent-borne epoxy functional acrylic binder. The overcoatable primer coating composition may comprise from 10 to 90 wt%, suitably from 10 to 60 wt%, such as from 10 to 40 wt%, or even from 20 to 40 wt% of the solvent-borne epoxy functional acrylic binder based on the total solid weight of the coating composition.

The overcoatable primer coating composition according to the present invention may be cured at any suitable temperature. In certain embodiments, the overcoatable primer coating composition may be cured at a temperature from 5 to 250 °C, suitably from 5 to 100 °C, such as from 5 to 50 °C, or even from 10 to 30 °C. Suitably, the overcoatable primer coating composition is cured at ambient temperature.

In certain embodiments, the overcoatable primer coating composition may optionally comprise a corrosion inhibiting additive. "Corrosion inhibiting additive" and like terms, as used herein, refers to compounds which, when included in a coating composition that is deposited upon a substrate, act to provide a coating that resists or, in some cases, even prevents, the alteration or degradation of the substrate, such as by a chemical or electrochemical oxidizing process, including rust in iron containing substrates and degradative oxides in aluminum substrates.

Suitable corrosion inhibiting additive will be well known to a person skilled in the art. Suitable examples of corrosion inhibiting additives include, but are not limited to the following: inorganic oxides such as, for example, oxides of zinc, cerium, yttrium, manganese, magnesium, molybdenum, lithium, aluminum, magnesium, tin, calcium, boron, phosphorous, silicon, zirconium, iron or titanium; organosilicon compounds such as polydimethyl siloxane (PDMA) or combinations thereof. In certain embodiments, the corrosion inhibiting additive may comprise zinc oxide (ZnO), magnesium oxide (MgO); cerium oxide (CeO₂), molybdenum oxide (MoO₃), silicon dioxide (Si0₂) or combinations thereof. Suitably, the corrosion inhibiting additive may comprise magnesium oxide (MgO).

In certain embodiments, the corrosion inhibiting additive, when present, may be in the form of a nano-powder. The term "nano-powder", as used herein, refers to a corrosion inhibiting additive having an average particle size of less than about 50 nm. For example, the corrosion inhibiting additive may comprise nano-magnesium oxide or nano-zinc oxide. In certain embodiments, the corrosion inhibiting additive may comprise nano-magnesium oxide.

The corrosion inhibiting additive, when present, may be in any suitable form, for example in the form of a homogeneous mixture or as a solid state solution.

The corrosion inhibiting additive, when present, may suitably be used in the overcoatable primer coating composition in amounts from about 5 to 60 wt%, suitably from about 10 to 50 wt%, such as from about 10 to 40 wt%, or even from about 20 to 30 wt% based on the total solid weight of the coating composition.

In certain embodiments, the overcoatable primer coating composition may comprise an adhesion promoting additive. Suitable adhesion promoting additives will be well known to a person skilled in the art. Suitable examples of adhesion promoting additives include, but are not limited to the following: epoxy resins; epoxy-phenolic resins; silane resins; organo-functional silanes such as epoxy or amine functional silanes; novolak resins; dimers and trimers of isophorone diisocyanate (IPDI), hexamethylene diisocyanate (HDMI); toluene diisocyanate; blocked isocyanates such as caprolactam blocked IPDI and combinations thereof. Suitably, the adhesion promoting additive may comprise an organo-functional silane, such as epoxy or amine functional silane. The adhesion promoting additive, when present, may suitably be used in the overcoatable primer coating composition in amounts from about 0 to10 wt% based on the total solid weight of the coating composition.

The overcoatable primer coating composition comprises a further binder comprising an epoxy functional binder, such as bisphenol A diglycidyl ether or bisphenol F diglycidyl ether. The further binder may suitably be used in the overcoatable primer coating composition in amounts from about 1 to 50 wt%, suitably from 5 to 30 wt%, such as from 10 to 20 wt% based on the total solid weight of the coating composition.

In certain embodiments, the solvent-borne epoxy functional acrylic binder may form from 10 to 100% by weight of the total binder present in the overcoatable primer coating composition. Suitably, the further binder may form from 90 to 0% by weight of the total binder present in the overcoatable primer coating composition. In certain embodiments, the solvent-borne epoxy functional acrylic binder may form from 20 to 100% by weight of the total binder present in the overcoatable primer coating composition. Suitably, the further binder may form from 80 to 0% by weight of the total binder present in the overcoatable primer coating composition. In certain embodiments, the solvent-borne epoxy functional acrylic binder may form from 30 to 100% by weight of the total binder present in the overcoatable primer coating composition. Suitably, the further binder may form from 70 to 0% by weight of the total binder present in the overcoatable primer coating composition. In certain embodiments, the solvent-borne epoxy functional acrylic binder may form from 40 to 100% by weight of the total binder present in the overcoatable primer coating composition. Suitably, the further binder may form from 60 to 0% by weight of the total binder present in the overcoatable primer coating composition. In certain embodiments, the solvent-borne epoxy functional acrylic binder may form from 50 to 100% by weight of the total binder present in the overcoatable primer coating composition. Suitably, the further binder may form from 50 to 0% by weight of the total binder present in the overcoatable primer coating composition.

In certain embodiments, the solvent-borne epoxy functional acrylic binder may form from 10 to 100% by weight of the total binder present in the overcoatable primer coating composition. Suitably, the further binder comprising an epoxy functional binder, such as bisphenol A diglycidyl ether or bisphenol F diglycidyl ether, may form from 90 to 0% by weight of the total binder present in the overcoatable primer coating composition. In certain embodiments, the solvent-borne epoxy functional acrylic binder may form from 20 to 100% by weight of the total binder present in the overcoatable primer coating composition. Suitably, the further binder comprising an epoxy functional binder, such as bisphenol A diglycidyl ether or bisphenol F diglycidyl ether, may form from 80 to 0% by weight of the total binder present in the overcoatable primer coating composition. In certain embodiments, the solvent-borne epoxy functional acrylic binder may form from 30 to 100% by weight of the total binder present in the overcoatable primer coating composition. Suitably, the further binder comprising an epoxy functional binder, such as bisphenol A diglycidyl ether or bisphenol F diglycidyl ether, may form from 70 to 0% by weight of the total binder present in the overcoatable primer coating composition. In certain embodiments, the solvent-borne epoxy functional acrylic binder may form from 40 to 100% by weight of the total binder present in the overcoatable primer coating composition. Suitably, the further binder comprising an epoxy functional binder, such as bisphenol A diglycidyl ether or bisphenol F diglycidyl ether, may form from 60 to 0% by weight of the total binder present in the overcoatable primer coating composition. In certain embodiments, the solvent-borne epoxy functional acrylic binder may form from 50 to 100% by weight of the total binder present in the overcoatable primer coating composition. Suitably, the further binder comprising an epoxy functional binder, such as bisphenol A diglycidyl ether or bisphenol F diglycidyl ether, may form from 50 to 0% by weight of the total binder present in the overcoatable primer coating composition.

In certain embodiments, the solvent-borne epoxy functional acrylic binder may form from 10 to 99.9% by weight of the total binder present in the overcoatable primer coating composition. Suitably, the further binder may form from 90 to 0.1% by weight of the total binder present in the overcoatable primer coating composition. In certain embodiments, the solvent-borne epoxy functional acrylic binder may form from 20 to 99.9% by weight of the total binder present in the overcoatable primer coating composition. Suitably, the further binder may form from 80 to 0.1% by weight of the total binder present in the overcoatable primer coating composition. In certain embodiments, the solvent-borne epoxy functional acrylic binder may form from 30 to 99.9% by weight of the total binder present in the overcoatable primer coating composition. Suitably, the further binder may form from 70 to 0.1% by weight of the total binder present in the overcoatable primer coating composition. In certain embodiments, the solvent-borne epoxy functional acrylic binder may form from 40 to 99.9% by weight of the total binder present in the overcoatable primer coating composition. Suitably, the further binder may form from 60 to 0.1% by weight of the total binder present in the overcoatable primer coating composition. In certain embodiments, the solvent-borne epoxy functional acrylic binder may form from 50 to 99.9% by weight of the total binder present in the overcoatable primer coating composition. Suitably, the further binder may form from 50 to 0.1% by weight of the total binder present in the overcoatable primer coating composition.

In certain embodiments, the solvent-borne epoxy functional acrylic binder may form from 10 to 99.9% by weight of the total binder present in the overcoatable primer coating composition. Suitably, the further binder comprising an epoxy functional binder, such as bisphenol A diglycidyl ether or bisphenol F diglycidyl ether, may form from 90 to 0.1% by weight of the total binder present in the overcoatable primer coating composition. In certain embodiments, the solvent-borne epoxy functional acrylic binder may form from 20 to 99.9% by weight of the total binder present in the overcoatable primer coating composition. Suitably, the further binder comprising an epoxy functional binder, such as bisphenol A diglycidyl ether or bisphenol F diglycidyl ether, may form from 80 to 0.1% by weight of the total binder present in the overcoatable primer coating composition. In certain embodiments, the solvent-borne epoxy functional acrylic binder may form from 30 to 99.9% by weight of the total binder present in the overcoatable primer coating composition. Suitably, the further binder comprising an epoxy functional binder, such as bisphenol A diglycidyl ether or bisphenol F diglycidyl ether, may form from 70 to 0.1% by weight of the total binder present in the overcoatable primer coating composition. In certain embodiments, the solvent-borne epoxy functional acrylic binder may form from 40 to 99.9% by weight of the total binder present in the overcoatable primer coating composition. Suitably, the further binder comprising an epoxy functional binder, such as bisphenol A diglycidyl ether or bisphenol F diglycidyl ether, may form from 60 to 0.1% by weight of the total binder present in the overcoatable primer coating composition. In certain embodiments, the solvent-borne epoxy functional acrylic binder may form from 50 to 99.9% by weight of the total binder present in the overcoatable primer coating composition. Suitably, the further binder comprising an epoxy functional binder, such as bisphenol A diglycidyl ether or bisphenol F diglycidyl ether, may form from 50 to 0.1% by weight of the total binder present in the overcoatable primer coating composition.

In certain embodiments, the overcoatable primer coating composition according to the present invention may further comprise an additional crosslinking agent. The additional crosslinking agent may be any suitable crosslinking agent. Suitable additional crosslinking agents will be well known to the person skilled in the art. Suitable crosslinking agents include, but are not limited to the following: phenolic resins (or phenol-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof.

In certain embodiments, the additional crosslinking agent may comprise a phenolic resin. Non-limiting examples of phenolic resins are those formed from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to PHENODUR® PR285 and BR612 and resins sold under the trademark BAKELITE® such as BAKELITE 6582 LB.

In certain embodiments, the additional crosslinking agent may comprise an isocyanate resin. Suitable isocyanates include but are not restricted to multifunctional isocyanates. Suitable examples of multifunctional polyisocyanates include, but are not limited to the following: aliphatic diisocyanates like hexamethylene diisocyanate and isophorone diisocyanate; and aromatic diisocyanates like toluene diisocyanate and 4,4'-diphenylmethane diisocyanate. The polyisocyanates may be blocked or unblocked. Examples of other suitable polyisocyanates include, but are non limited to the following: isocyanurate trimers; allophanates; uretdiones of diisocyanates; polycarbodiimides and combinations thereof. Suitable examples of commercially available polyisocyanates include but are not restricted to DESMODUR VP2078 and DESMODUR N3390, which are sold by Bayer Corporation, and TOLONATE HDT90, which is sold by Rhodia Inc.

In certain embodiment, the additional crosslinking agent may comprise an aminoplast resin. Non-limiting examples of aminoplast resins include those which are formed from the reaction of a triazine such as melamine or benzoguanamine with formaldehyde. Suitably, the resultant compounds may be etherified with an alcohol such as methanol, ethanol, butanol or combinations thereof. The preparation and use of aminoplast resins is described in "The Chemistry and Applications of Amino Crosslinking Agents or Aminoplast", Vol V, Part II, page 21 ff., edited by Dr Oldring; John Wiley and Sons/Cita Technology Limited, London, 1998.

The overcoatable primer coating composition according to the present invention may optionally contain an additive or combination of additives. The overcoatable primer coating composition may optionally contain any suitable additive. Suitable additives will be well known to the person skilled in the art. Examples of suitable additives include, but are not limited to the following: catalysts, lubricants; pigments; plasticisers; surfactants; flow control agents; thixotropic agents; fillers; diluents; organic solvents and combinations thereof.

Suitable catalysts will be well known to the person skilled in the art. Suitable catalysts include, but are not limited to the following: phosphoric acid; alkyl aryl sulphonic acids such as dodecyl benzene sulphonic acid; methane sulphonic acid; para-toluene sulphonic acid; dinonyl naphthalene disulphonic acid; phenyl phosphinic acid and combinations thereof. The catalyst, when present, may be used in the overcoatable primer coating composition in any suitable amount. In certain embodiments the catalyst, when present, may be used in amounts from 0.01 to 10 wt%, suitably from 0.1 to 2 wt% based on the total solid weight of the coating composition.

Suitable lubricants will be well known to the person skilled in the art. Suitable examples of lubricants include, but are not limited to the following: carnauba wax and polyethylene type lubricants. In certain embodiments the lubricant, when present, may be used in the overcoatable primer coating composition in amounts of at least 0.01 wt% based on the total solid weight of the coating composition.

Suitable pigments will be well known to the person skilled in the art. A suitable pigment may be, for example, titanium dioxide. The pigment, when present, may be used in the overcoatable primer coating composition in any suitable amount. In certain embodiments, the pigment, when present, may be used in the overcoatable primer coating composition in amounts up to 90 wt%, such as up to 50 wt%, or even up to 10 wt% based on the total solid weight of the coating composition.

Surfactants may optionally be added to the overcoatable primer coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to the following: alkyl sulfates (e.g., sodium lauryl sulfate); ether sulfates; phosphate esters; sulphonates; and their various alkali, ammonium, amine salts; aliphatic alcohol ethoxylates; alkyl phenol ethoxylates (e.g. nonyl phenol polyether); polysiloxane-based surfactants; acrylic-based surfactants; salts and/or combinations thereof. The surfactants, when present, may be present in amounts from 0.01 wt% to 10 wt% based on the total solid weight of the coating composition.

The overcoatable primer coating compositions according to the present invention may be applied to any suitable substrate. The overcoatable primer coating compositions according to the present invention may be used, for example, in various industrial applications because of their favourable anti-corrosive properties. Typical industrial applications for the compositions of the invention include, for example, use for the production of coatings and/or intermediate coatings on many types of metal substrates. Suitable metal substrates include, but are not limited to the following: sheet steel; cast iron; aluminium; metal alloys such as alloys of aluminium or steel; nonferrous metals, such as brass, bronze and copper and combinations thereof. In particular, the overcoatable primer coating compositions of the invention may be used as paints and coatings for coating industrial objects and, in particular, in the shipbuilding and aerospace industries. For example, when used in the shipbuilding industry, the overcoatable primer coating compositions may be applied to a marine vessel or a marine structure such as ships hulls, including blocks for shipbuilding. In the latter case, blocks may be for hulls or other components such as ballast tanks. For example, when used in the aerospace industry, the overcoatable primer coating compositions may be applied to an aircraft, such as aircraft exterior panels and/or interior surfaces.

In certain embodiments, the overcoatable primer coating compositions may be applied to a bare substrate.

In certain embodiments, the overcoatable primer coating compositions may be applied to a pre-treated substrate. Typical pre-treatments include, for example, conventional phosphating baths, heavy metal rinses or the application of pre-treatment coating compositions. The term "pre-treatment coating composition", as used herein, refers to coating compositions that can be applied at very low film thickness to a bare substrate to improve corrosion resistance or to increase adhesion of subsequently applied coating layers.

The primer coating compositions according to the present invention may be applied by any suitable method. Suitable methods include, for example, brushing, rolling, spraying, dipping, electrodeposition and the like.

In certain embodiments, the overcoatable primer coating composition may be applied to a marine vessel or marine structure.

In certain embodiments, the overcoatable primer coating composition may be applied to an aircraft. In certain embodiments, the overcoatable primer coating composition, when applied to an aircraft, may comprise a corrosion inhibiting additive. Suitable corrosion inhibiting additives are as defined herein.

The overcoatable primer coating compositions according to the present invention may be applied to any suitable dry film thickness. In certain embodiments the overcoatable primer coating compositions may be applied to a dry film thickness from 25 to 1000 µm.

The overcoatable primer coating composition according to the present invention may be applied to a substrate as a single layer or as part of a multi layer system. In certain embodiments, the coating composition may be applied as a single layer. In certain embodiments, the coating composition may be applied as the first coat of a multi coat system. Suitably, the coating composition may be applied as an undercoat or a primer. The second, third, fourth etc. coats may comprise any suitable paint such as those containing, for example, epoxy resins; modified epoxy resins; tar epoxy resins; polyester resins; polyurethane resins; polysiloxane resins; hydrocarbon resins; silicone alkyd resins; phenol resins; vinyl resins; vinyl chloride resins; chlorinated rubber resins; polyurea resins; fluorine resins; silicone modified resins; acrylic resins; or combinations thereof. In certain embodiments, acrylic resin or vinyl resin "antifouling coatings", which hinder the adhesion of organisms, may be used as functional coating materials. Other protective and/or decorative coats may be applied as well.

In certain embodiments, the coating compositions may be applied on top of another paint layer as part of a multi layer system. For example, the coating compositions may form an intermediate layer. The coating composition may be applied to a substrate once or multiple times.

According to a second aspect of the present invention there is provided the use of an overcoatable primer coating composition for increasing corrosion resistance in a multi coat coating system, the overcoatable primer coating composition comprising
i) a solvent-borne epoxy functional acrylic binder formed from glycidyl methacrylate and at least one further ethylenically unsaturated monomer;
ii) a crosslinker comprising a polyamine; and
iii) a further binder comprising an epoxy functional binder.

According to a further aspect of the present invention there is provided a coating system comprising an overcoatable primer coating composition and an overcoat coating composition, the overcoatable primer coating composition comprising
i) a solvent-borne epoxy functional acrylic binder formed from glycidyl methacrylate and at least one further ethylenically unsaturated monomer;
ii) a crosslinker comprising a polyamine; and
iii) a further binder comprising an epoxy functional binder.

According to a further aspect of the present invention there is provided a marine vessel or marine structure coated on at least a portion thereof with a coating system comprising an overcoatable primer coating composition and an overcoat coating composition, the overcoatable primer coating composition comprising
i) a solvent-borne epoxy functional acrylic binder formed from glycidyl methacrylate and at least one further ethylenically unsaturated monomer; and
ii) a crosslinker comprising a polyamine.

According to a further aspect of the present invention there is provided a coating system comprising an overcoatable primer coating composition and an overcoat coating composition, the overcoatable primer coating composition comprising
i) a solvent-borne epoxy functional acrylic binder formed from glycidyl methacrylate and at least one further ethylenically unsaturated monomer; and
ii) a crosslinker comprising a polyamine,
wherein the overcoat coating composition is a marine paint composition.

The term "marine paint composition", as used herein, refers to a paint composition suitable for application in the marine industry such as marine vessels or marine structures. Suitably, the marine paint composition may prevent the adhesion of microorganisms, plants and animals to the substrate. Traditionally, there are several ways that a coating composition can be designed to prevent the adhesion and build up of fouling agents on a surface. The coating can contain a biocide which serves to poison and/or deter the organism attached to the surface, thus causing the organism to fall off the surface. This mode of adhesion prevention is often referred to as "antifouling" and such coatings often referred to as antifouling coatings.

Such coatings may also be designed to slowly degrade or erode over time, thus organisms adhered to the surface will also gradually fall off the surface with the degradation of the coating or via concomitant release of biocide. The type of erosion of the surface varies but is generally based on the slightly soluble nature of the binder. The term ablative has been used to describe all these kinds of erosion. However, ablative also refers to a particular type of erosion which is also termed sloughing and is generally provided by slightly soluble binders such as rosin present in the binder. To avoid confusion therefore, by ablative herein we mean this sloughing type of erosion.

Another type of degradation is commonly caused by a reaction at the surface in seawater such as hydrolysis leading to products which are then slightly soluble in seawater including the film forming polymer. This mode of adhesion prevention is often referred to as "self polishing" and such coatings are often referred to as self polishing coatings. Such coatings may possibly contain no biocide and may require less biocide than traditional ablative coatings.

Accordingly, in order to obtain an effective and efficient removal of organisms from surfaces it is now common practice to produce coating compositions that may usually contain a biocide and which slowly degrade over time. Such potentially dual functional coatings are often referred to as erodible antifouling coatings and include both self polishing and ablative coatings. However, in the present invention an erodible antifouling coating is not necessarily accompanied by an antifouling agent. Suitably, the marine paint composition may be an antifouling, self polishing, ablative and/or erodible antifouling coating.

There may be provided a marine vessel or marine structure coated on at least a portion thereof with a coating system comprising an overcoatable primer coating composition and an overcoat coating composition, the overcoatable primer coating composition comprising
i) a solvent-borne epoxy functional acrylic binder formed from glycidyl methacrylate and at least one further ethylenically unsaturated monomer; and
ii) a crosslinker comprising a polyamine,
wherein the overcoat coating composition is a marine paint composition.

According to a further aspect of the present invention there is provided an aircraft coated on at least a portion thereof with a coating system according to the present invention.

For a better understanding of the invention, and to show how embodiments of the same may be carried into effect, reference will now be made, by way of example, to the following experimental data.

### Examples

### Example 1

### Preparation of GMA/Acrylic resin

An epoxy functional acrylic binder formed from glycidyl methacrylate and styrene was synthesised. The polymerisation was carried out in a 2 litre, 4-necked reaction flask equipped with heating, cooling, a thermocouple, stirring via a motor-driven steel stir blade and a cooled reflux condenser. A nitrogen flow was applied to the reaction flask at a rate of 0.2 standard cubic feet (scft)/minute to provide an inert atmosphere. 27.41 parts by weight A-100 and 0.2 parts by weight Dowanol PM glycol ether (available from The Dow Chemical Company) were charged added to the reaction flask and heated to 158 °C. 4.09 parts by weight di-t-amyl peroxide and 6.13 parts by weight Dowanol PM glycol ether (available from The Dow Chemical Company) were then added to the reaction flasks over a period of 180 minutes, followed by 55.21 parts by weight styrene and 6.13 parts by weight glycidyl methacrylate over a period of 150 minutes. The reaction vessel was then held at a temperature of 158 °C for 30 minutes. Then 0.31 parts by weight di-t-amyl peroxide and 0.61 parts by weight Dowanol PM glycol ether (available from The Dow Chemical Company) were added to the reaction flask over a period of 30 minutes. The temperature of the reaction flask was held at 158 °C for an additional hour and then allowed to cool to <40 °C. The resin was discharged from the reaction flask into unlined metal cans.

The resultant resin has a solids content of 68.4 wt%, a viscosity of 4,500 Centipoise as measured in accordance with ASTM method D-1545 using a bubble viscometer, an epoxy equivalent weight of 2,262 as measured in accordance with ASTM D1652 (Test method B) and a number-average molecular weight of 2,230 Da as measured using gel permeation chromatography (also known as size exclusion chromatography) according to ASTM D6579-11. A sample stored at a temperature of 48.8 °C for one month remained liquid.

### Examples 2-5

Example primer coating formulations according to the present invention (Examples 2, 3, 4 and 5) and Comparative Examples 1 and 2 were prepared as displayed in Table 1, below. All amounts are given in parts by weight. The coatings were prepared as typical two component ("2K") compositions. Two pre-mixed pigmented components, one containing the epoxy-functional acrylic binder and the other the crosslinker(s) were mixed together with a pneumatic air mixer at moderate speeds to homogenize the container for 1-2 minutes.

**Table 1**

| | Example 2 | Example 3 | Example 4 | Example 5 | Comparative Example 1 | Comparative Example 2 |
|---|---|---|---|---|---|---|
| Epoxy-functional acrylic binder example 1¹ | 36.67 | 22.03 | 24.99 | 13.1 | - | - |
| Crosslinker² | 7.12 | 8.54 | 9.71 | 10.19 | 10.69 | 10.69 |
| Crosslinker³ | 4.72 | 5.67 | 6.45 | 6.75 | 7.10 | 7.10 |
| Crosslinker⁴ | 0.65 | 0.65 | 0.65 | 0.65 | 0.65 | 0.65 |
| Further Binder⁵ | 9.29 | 16.74 | 12.68 | 19.95 | 27.94 | 27.94 |
| Further Binder⁶ | 3.025 | 3.63 | 4.13 | 4.32 | 4.54 | 4.54 |
| Corrosion Inhibiting additive⁷ | 17.51 | 17.51 | 17.51 | 17.51 | 26.07 | 17.51 |
| Pigment⁸ | 9.46 | 9.44 | 9.44 | 9.44 | 9.44 | 9.44 |
| Adhesion promoter⁹ | 0.82 | 0.82 | 0.82 | 0.82 | 0.82 | 0.82 |
| Solvent¹⁰ | 25.84 | 25.84 | 25.84 | 25.84 | 25.84 | 25.84 |
| Solvent¹¹ | 4.86 | 4.86 | 4.86 | 4.86 | 4.86 | 4.86 |
| Solvent¹² | 33.41 | 33.41 | 33.41 | 33.41 | 33.41 | 33.41 |

| | | | | | | |
|---|---|---|---|---|---|---|
| ¹68.4 % solids ²Ancamine 2569, 90% solids, available from Air Products and Chemicals, Inc. ³Ancamine 2432, 100% solids, available from Air Products and Chemicals, Inc. ⁴Ancamine K-54, 100% solids , available from Air Products and Chemicals, Inc. ⁵Epon 828, available from Momentive Performance Materials Inc. ⁶Epon TM 8111, available from Momentive Performance Materials Inc. ⁷Magnesium oxide (MgO), 100% solids, with an average particle size of 20nm and a surface area of 50m²/g. ⁸Ti-Pure R-706, 100% solids ⁹Silquest* A-187, available from Momentive Performance Materials Inc. ¹⁰Sutyl alcohol ¹¹Amsco Solv 1420 ¹²OXSOI 100 | | | | | | |

### Test Methods

**Test Panel Preparation:** The coating samples were applied onto one of three substrates: (A) a commercially available 2024-T3 bare aluminium panel abraded until surface oxidation was removed using EAC-8 (a metal conditioner available from PPG Aerospace Surface Solutions); (B) a commercially available 2024-T3 bare aluminium panel pre-treated with Alodine® 1200S (a hexavalent chromium-containing conversion coating available from Henkel Corporation); or (C) a 7075-T6 clad aluminium panel abraded until surface oxidation was removed using EAC-8 and EAP-9 (metal conditioners available from PPG Aerospace Surface Solutions). The coatings were sprayed onto the substrates immediately following mixing using conventional air spray equipment.

**Salt Spray Test:** Salt spray resistance was tested as described in ASTM B117. The coated panels were scribed with a knife to expose the bare metal substrate. The scribed panel was placed into a test chamber where an aqueous salt solution was continuously misted onto the panel. The chamber was maintained at a constant temperature of 33 to 36 °C. The coated substrate was exposed to the salt spray environment for 500 to 1000 hours. After exposure, the coated panels were removed from the test chamber and evaluated for corrosion along the scribe.

**Visual blisters:** The panels were evaluated for face blistering in accordance with ASTM D714-87.

**Table 2**

| | Substrate | % Scribe Corrosion | % Dark Scribe | No. Scribe Blisters | No. Face Blisters | Comments |
|---|---|---|---|---|---|---|
| Example 2 | A | 10 | 70 | 2.5 | 0 | small |
| | B | 12.5 | 70 | 0 | 0 | - |
| | C | 12.5 | 77.5 | 31 (1*,1^{‡}) | 0 | microblister cluster |
| Example 3 | A | 15 | 80 | 12 | 0 | tiny |
| | B | 15 | 80 | 0 | 0 | - |
| | C | 12.5 | 85 | 31 (1*,1^{‡}) | 0 | microblister cluster |
| Example 4 | A | 12.5 | 82.5 | 1 | 0 | - |
| | B | 10 | 85 | 0 | 0 | - |
| | C | 10 | 82.5 | 31 (1*,1^{‡}) | 7.5 | microblister cluster |
| Example 5 | A | 10 | 90 | 3 | 0 | tiny |
| | B | 22.5 | 90 | 0 | 0 | - |
| | C | 22.5 | 90 | 31 (1*,1^{‡}) | 0 | microblister cluster |
| Comparative Example 1 | A | 10 | 95 | 1.5 | 0 | tiny |
| | B | 25 | 95 | 0.5 | 0 | tiny |
| | C | 25 | 95 | 31 (1*,1^{‡}) | 0 | pulled 1008 |
| Comparative Example 2 | A | 25 | 95 | 6.5 | 0 | tiny |
| | B | 25 | 95 | 2.5 | 0 | tiny |
| | C | 25 | 95 | 31 (1*,1^{‡}) | 0 | pulled 1008 |

| | | | | | | |
|---|---|---|---|---|---|---|
| A - Substrate = 2024 T3 Bare, Pre-treatment = EAC-8 Abrade B - Substrate = 2024 T3 Bare, Pre-treatment = Alodine® 1200S C - Substrate = 7075 T6 Clad, Pre-treatment = EAC-8 Abrade/EAP-9 * Number of scribe blisters >1/16" to <1/8" ^{‡} Number of scribe blisters >1/8" | | | | | | |

The results show that the coating compositions according to the present invention (examples 2 to 5), which comprise an epoxy-functional acrylic binder, have greater resistance to corrosion compared to the comparative examples 1 and 2.

## Claims

1. An overcoatable primer coating composition comprising
(i) a solvent-borne epoxy functional acrylic binder formed from glycidyl methacrylate and at least one further ethylenically unsaturated monomer;
(ii) a crosslinker comprising a polyamine; and
(iii) a further binder comprising an epoxy functional binder.

2. A coating composition according to claim 1, wherein the glycidyl methacrylate and at least one further ethylenically unsaturated monomer represents at least 80% by weight of the monomers that form the solvent-borne epoxy functional acrylic binder.

3. A coating composition according to either of claim 1 or claim 2, wherein the at least one further ethylenically unsaturated monomer comprises styrene.

4. A coating composition according to claim 3, wherein the glycidyl methacrylate and styrene monomers represent at least 80% by weight of the monomers that form the solvent-borne epoxy functional acrylic binder.

5. A coating composition according to any preceding claim, which coating composition further comprises a corrosion inhibiting additive, wherein the corrosion inhibiting additive preferably comprises a compound of magnesium, such as magnesium oxide (MgO).

6. A coating composition according to any preceding claim, which coating composition further comprises an adhesion promoting additive, wherein the adhesion promoting additive preferably comprises an organo-functional silane material, such as epoxy or amine functional silane.

7. A coating composition according to any preceding claim, wherein the binder comprises 10 to 99.9% by weight of the solvent-borne epoxy functional acrylic binder and 90 to 0.1% by weight of the further binder.

8. A coating composition according to claim 7, wherein the further binder comprising an epoxy functional binder is bisphenol A diglycidyl ether or bisphenol F diglycidyl ether.

9. A coating composition according to claim 1, wherein the binder comprises 30 to 99.9% by weight of the solvent-borne epoxy functional acrylic binder and 70 to 0.1% by weight of the further binder comprising an epoxy functional binder, such as bisphenol A diglycidyl ether or bisphenol F diglycidyl ether.

10. Use of an overcoatable primer coating composition for increasing corrosion resistance in a multi coat coating system, the overcoatable primer coating composition comprising
(i) a solvent-borne epoxy functional acrylic binder formed from glycidyl methacrylate and at least one further ethylenically unsaturated monomer;
(ii) a crosslinker comprising a polyamine; and
(iii) a further binder comprising an epoxy functional binder.

11. A coating system comprising an overcoatable primer coating composition and an overcoat coating composition, the overcoatable primer coating composition comprising
(i) a solvent-borne epoxy functional acrylic binder formed from glycidyl methacrylate and at least one further ethylenically unsaturated monomer; and
(ii) a crosslinker comprising a polyamine; and
(iii) a further binder comprising an epoxy functional binder.

12. A marine vessel or marine structure coated on at least a portion thereof with a coating system comprising an overcoatable primer coating composition and an overcoat coating composition, the overcoatable primer coating composition comprising
(i) a solvent-borne epoxy functional acrylic binder formed from glycidyl methacrylate and at least one further ethylenically unsaturated monomer; and
(ii) a crosslinker comprising a polyamine.

13. A coating system comprising an overcoatable primer coating composition and an overcoat coating composition, the overcoatable primer coating composition comprising
(i) a solvent-borne epoxy functional acrylic binder formed from glycidyl methacrylate and at least one further ethylenically unsaturated monomer; and
(ii) a crosslinker comprising a polyamine
wherein the overcoat coating composition is a marine paint composition.

14. An aircraft coated on at least a portion thereof with a coating system according to claim 11.

15. A coating system comprising an overcoatable primer coating composition and an overcoat coating composition, the overcoatable primer coating composition comprising
(i) a solvent-borne epoxy functional acrylic binder formed from glycidyl methacrylate and at least one further ethylenically unsaturated monomer; and
(ii) a crosslinker comprising a polyamine; and
(iii) a further binder comprising an epoxy functional binder
wherein the overcoat coating composition is an aerospace paint composition.

## Patentansprüche

1. Überlackierbare Grundierungsbeschichtungszusammensetzung, umfassend
i) ein lösungsmittelhaltiges epoxyfunktionelles Acrylbindemittel, das aus Glycidylmethacrylat und mindestens einem weiteren ethylenisch ungesättigten Monomer gebildet ist;
ii) einen Vernetzer, der ein Polyamin umfasst; und
iii) ein weiteres Bindemittel, das ein epoxyfunktionelles Bindemittel umfasst.

2. Beschichtungszusammensetzung nach Anspruch 1, wobei das Glycidylmethacrylat und mindestens eine weitere ethylenisch ungesättigte Monomer mindestens 80 Gew.-% der Monomere, die das lösungsmittelhaltige epoxyfunktionelle Acrylbindemittel bilden, ausmachen.

3. Beschichtungszusammensetzung nach Anspruch 1 oder Anspruch 2, wobei das mindestens eine weitere ethylenisch ungesättigte Monomer Styrol umfasst.

4. Beschichtungszusammensetzung nach Anspruch 3, wobei die Glycidylmethacrylat- und Styrolmonomere mindestens 80 Gew.-% der Monomere, die das lösungsmittelhaltige epoxyfunktionelle Acrylbindemittel bilden, ausmachen.

5. Beschichtungszusammensetzung nach einem der vorhergehenden Ansprüche, wobei die Beschichtungszusammensetzung ferner ein korrosionsinhibierendes Additiv umfasst, wobei das korrosionsinhibierende Additiv vorzugsweise eine Magnesiumverbindung wie Magnesiumoxid (MgO) umfasst.

6. Beschichtungszusammensetzung nach einem der vorhergehenden Ansprüche, wobei die Beschichtungszusammensetzung ferner ein haftvermittelndes Additiv umfasst, wobei das haftvermittelnde Additiv vorzugsweise ein organofunktionelles Silanmaterial wie epoxy- oder aminfunktionelles Silan umfasst.

7. Beschichtungszusammensetzung nach einem der vorhergehenden Ansprüche, wobei das Bindemittel 10 bis 99,9 Gew.-% des lösungsmittelhaltigen epoxyfunktionellen Acrylbindemittels und 90 bis 0,1 Gew.-% des weiteren Bindemittels umfasst.

8. Beschichtungszusammensetzung nach Anspruch 7, wobei es sich bei dem weiteren Bindemittel, das ein epoxyfunktionelles Bindemittel umfasst, um Bisphenol-A-diglycidylether oder Bisphenol-F-diglycidylether handelt.

9. Beschichtungszusammensetzung nach Anspruch 1, wobei das Bindemittel 30 bis 99,9 Gew.-% des lösungsmittelhaltigen epoxyfunktionellen Acrylbindemittels und 70 bis 0,1 Gew.-% des weiteren Bindemittels, das ein epoxyfunktionelles Bindemittel wie Bisphenol-A-diglycidylether oder Bisphenol-F-diglycidylether umfasst, umfasst.

10. Verwendung einer überlackierbaren Grundierungsbeschichtungszusammensetzung zur Erhöhung der Korrosionsbeständigkeit in einer Mehrschichtlackierung, wobei die überlackierbare Grundierungsbeschichtungszusammensetzung Folgendes umfasst:
i) ein lösungsmittelhaltiges epoxyfunktionelles Acrylbindemittel, das aus Glycidylmethacrylat und mindestens einem weiteren ethylenisch ungesättigten Monomer gebildet ist;
ii) einen Vernetzer, der ein Polyamin umfasst; und
iii) ein weiteres Bindemittel, das ein epoxyfunktionelles Bindemittel umfasst.

11. Beschichtungssystem, umfassend eine überlackierbare Grundierungsbeschichtungszusammensetzung und eine Beschichtungszusammensetzung zum Überlackieren, wobei die überlackierbare Grundierungsbeschichtungszusammensetzung Folgendes umfasst:
i) ein lösungsmittelhaltiges epoxyfunktionelles Acrylbindemittel, das aus Glycidylmethacrylat und mindestens einem weiteren ethylenisch ungesättigten Monomer gebildet ist; und
ii) einen Vernetzer, der ein Polyamin umfasst; und
iii) ein weiteres Bindemittel, das ein epoxyfunktionelles Bindemittel umfasst.

12. Schiff oder marine Konstruktion, das bzw. die zumindest teilweise mit einer Lackierung beschichtet ist, die eine überlackierbare Grundierungsbeschichtungszusammensetzung und eine Beschichtungszusammensetzung zum Überlackieren umfasst, wobei die überlackierbare Grundierungsbeschichtungszusammensetzung Folgendes umfasst:
i) ein lösungsmittelhaltiges epoxyfunktionelles Acrylbindemittel, das aus Glycidylmethacrylat und mindestens einem weiteren ethylenisch ungesättigten Monomer gebildet ist; und
ii) einen Vernetzer, der ein Polyamin umfasst.

13. Lackierung, umfassend eine überlackierbare Grundierungsbeschichtungszusammensetzung und eine Beschichtungszusammensetzung zum Überlackieren, wobei die überlackierbare Grundierungsbeschichtungszusammensetzung Folgendes umfasst:
i) ein lösungsmittelhaltiges epoxyfunktionelles Acrylbindemittel, das aus Glycidylmethacrylat und mindestens einem weiteren ethylenisch ungesättigten Monomer gebildet ist; und
ii) einen Vernetzer, der ein Polyamin umfasst, wobei es sich bei der Beschichtungszusammensetzung zum Überlackieren um eine Lackzusammensetzung für den Marinebereich handelt.

14. Luftfahrzeug, das zumindest teilweise mit einem Beschichtungssystem nach Anspruch 11 beschichtet ist.

15. Beschichtungssystem, umfassend eine überlackierbare Grundierungsbeschichtungszusammensetzung und eine Beschichtungszusammensetzung zum Überlackieren, wobei die überlackierbare Grundierungsbeschichtungszusammensetzung Folgendes umfasst:
(i) ein lösungsmittelhaltiges epoxyfunktionelles Acrylbindemittel, das aus Glycidylmethacrylat und mindestens einem weiteren ethylenisch ungesättigten Monomer gebildet ist; und
(ii) einen Vernetzer, der ein Polyamin umfasst; und
(iii) ein weiteres Bindemittel, das ein epoxyfunktionelles Bindemittel umfasst, wobei es sich bei der Beschichtungszusammensetzung zum Überlackieren um eine Lackzusammensetzung für die die Luft- und Raumfahrt handelt.

## Revendications

1. Composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ;
(ii) un agent de réticulation comprenant une polyamine ; et
(iii) un liant supplémentaire comprenant un liant à fonctionnalité époxy.

2. Composition de revêtement selon la revendication 1, dans laquelle le méthacrylate de glycidyle et ledit au moins un monomère supplémentaire à insaturation éthylénique représentent au moins 80 % en poids des monomères qui forment le liant acrylique à fonctionnalité époxy à base de solvant.

3. Composition de revêtement selon la revendication 1 ou la revendication 2, dans laquelle ledit au moins un monomère supplémentaire à insaturation éthylénique comprend le styrène.

4. Composition de revêtement selon la revendication 3, dans laquelle les monomères méthacrylate de glycidyle et styrène représentent au moins 80 % en poids des monomères qui forment le liant acrylique à fonctionnalité époxy à base de solvant.

5. Composition de revêtement selon l'une quelconque des revendications précédentes, ladite composition de revêtement comprenant en outre un additif inhibiteur de corrosion, l'additif inhibiteur de corrosion comprenant préférablement un composé de magnésium, tel que l'oxyde de magnésium (MgO).

6. Composition de revêtement selon l'une quelconque des revendications précédentes, ladite composition de revêtement comprenant en outre un additif promoteur d'adhérence, l'additif promoteur d'adhérence comprenant préférablement un matériau silane organofonctionnel, tel qu'un silane à fonctionnalité époxy ou amine.

7. Composition de revêtement selon l'une quelconque des revendications précédentes, dans laquelle le liant comprend 10 à 99,9 % en poids du liant acrylique à fonctionnalité époxy à base de solvant et 90 à 0,1 % en poids du liant supplémentaire.

8. Composition de revêtement selon la revendication 7, dans laquelle le liant supplémentaire comprenant un liant à fonctionnalité époxy est un éther diglycidylique de bisphénol A ou un éther diglycidylique de bisphénol F.

9. Composition de revêtement selon la revendication 1, dans laquelle le liant comprend 30 à 99,9 % en poids du liant acrylique à fonctionnalité époxy à base de solvant et 70 à 0,1 % en poids du liant supplémentaire comprenant un liant à fonctionnalité époxy, tel qu'un éther diglycidylique de bisphénol A ou un éther diglycidylique de bisphénol F.

10. Utilisation d'une composition de revêtement d'apprêt recouvrable pour augmenter la résistance à la corrosion dans un système de revêtement multicouche, la composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ;
(ii) un agent de réticulation comprenant une polyamine ; et
(iii) un liant supplémentaire comprenant un liant à fonctionnalité époxy.

11. Système de revêtement comprenant une composition de revêtement d'apprêt recouvrable et une composition de revêtement de surface, la composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ; et
(ii) un agent de réticulation comprenant une polyamine ; et
(iii) un liant supplémentaire comprenant un liant à fonctionnalité époxy.

12. Navire marin ou structure marine dont au moins une partie est revêtue d'un système de revêtement comprenant une composition de revêtement d'apprêt recouvrable et une composition de revêtement de surface, la composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ; et
(ii) un agent de réticulation comprenant une polyamine.

13. Système de revêtement comprenant une composition de revêtement d'apprêt recouvrable et une composition de revêtement de surface, la composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ; et
(ii) un agent de réticulation comprenant une polyamine
dans lequel la composition de revêtement de surface est une composition de peinture marine.

14. Aéronef dont au moins une partie est revêtue d'un système de revêtement selon la revendication 11.

15. Système de revêtement comprenant une composition de revêtement d'apprêt recouvrable et une composition de revêtement de surface, la composition de revêtement d'apprêt recouvrable comprenant
(i) un liant acrylique à fonctionnalité époxy à base de solvant formé à partir de méthacrylate de glycidyle et d'au moins un monomère supplémentaire à insaturation éthylénique ; et
(ii) un agent de réticulation comprenant une polyamine ; et
(iii) un liant supplémentaire comprenant un liant à fonctionnalité époxy
dans lequel la composition de revêtement de surface est une composition de peinture aérospatiale.
